# EUROPEAN PATENT SPECIFICATION

(11) **EP 2 475 081 B1**
(45) Date of publication and mention of the grant of the patent: **15.10.2014**
(21) Application number: 11150386.8
(22) Date of filing: 07.01.2011
(51) Int. Cl.: H02K 17/30, H02K 11/00

(54) **Starting and running device for a compressor and method of assembling a starting and running device for a compressor**
Starter- und Betriebsvorrichtung für einen Kompressor und Verfahren zur Montage einer Starter- und Betriebsvorrichtung für einen Kompressor
Dispositif de démarrage et opération pour un compresseur et procédé d'assemblage d'un dispositif de démarrage et opération pour un compresseur

(43) Date of publication of application: 11.07.2012
(73) Proprietor: Epcos AG, 81669 München (DE)
(72) Inventor: Haenssler, Ronald, 83104 Tuntenhausen (DE); Eghe, Rahul, Nashik 422005 (IN); Sayed, Vikar Ali, Nashik 422007 (IN); Prem, Hans, 8010 Graz (AT)
(74) Representative: Epping - Hermann - Fischer

(56) References cited:
- WO-A1-98/00849
- WO-A1-2006/080695
- US-A- 3 168 661
- US-A1- 2004 090 752
- US-B1- 6 456 470

## Description

The present disclosure relates to a starting and running device for a compressor. The device may be used with a resistance start - capacitor run (RSCR) type compressor motor. As examples, the compressor motor may be part of a refrigerator, in particular a house hold refrigerator, a freezer, an air conditioner or a heat pump.

The patent document US 6,456,470 Bl discloses a starting device for a compressor. The patent application US 2004/0090752 Al discloses a module comprising a run capacitor, a positive temperature coefficient resistor and an overload protector. The resistor and the overload protector are located in a base and the run capacitor is located in a cover which is coupled to the base. A starting device for compressors is known from the patent publication US 6,456,470. In the starting device a thermal switch, a start or run capacitor and a PTC resistor are arranged in a container which is closed by a lid.

It is the aim of the present invention to provide an improved starting and running device for a compressor and an improved method for assembling a starting and running device. This aim is achieved by the starting and running device described in claim 1 and the method described in claim 8.

The starting and running device for a compressor comprises a casing enclosing a capacitor, a starter and an overload protector. The capacitor is fixed to the casing by a filling agent.

The device may be designed as a starting and running device for a compressor motor.

The capacitor may be designed as a motor run capacitor and may be connected to the compressor motor during a running phase. Preferably, the capacitor is connected to an auxiliary coil of the compressor and, thereby, improves the performance of the compressor.

The starter may comprise a PTC (positive temperature coefficient) element. The compressor motor may be started by making use of the PTC-effect, i.e., the increase of resistance with an increase of temperature. In particular, the compressor may comprise a single phase induction motor comprising a main coil and an auxiliary coil. Preferably, during the starting phase, the PTC element allows a high current flow in the auxiliary coil, which causes the motor to start. When the starting operation is over, the current is reduced or cut off in the auxiliary coil.

The overload protector serves to protect the motor by cutting off the current flow to the compressor motor in case that the temperature of the compressor motor rises above a maximum value. The overload protector may comprise a bimetal.

By positioning the capacitor, the starter and the overload protector in a common casing, a starting and running device is provided which may be easily handled and attached to a compressor motor. Preferably, the device is provided as a single component wherein the capacitor, starter and overload protector are integrated. By providing the components in a finished unit, where the position of each component is fixed, testing and quality control of the parts in their final positions is enabled and the quality of the starting and running device can be improved. Furthermore, the installation of the components to the compressor may be facilitated as the electrical connection between the components may be provided within the device.

Preferably, the starting and running device is designed as a plug-in type device which can be connected to the compressor motor by plugging the device onto the compressor motor. Thereby, a complex wiring of the components to the compressor can be avoided and the step of installing the device can be facilitated.

By fixing the capacitor to the casing by a filling agent, a device with increased compactness may be achieved. In particular, the capacitor may be free from any additional capacitor casing, and, in particular, free from a casing between a capacitor coil of the capacitor and the casing of the device. In this case, a minimum of space is required for the capacitor in the casing.

The casing may have a compartment for housing the capacitor. As an example, the compartment may be a cylindrical, in particular a circular cylindrical, compartment. The shape of the compartment may be adapted to the shape of the capacitor coil such that a minimum of space is wasted when housing the capacitor.

Preferably, the capacitor coil is directly fixed to the casing by the filling agent. In particular, no additional elements or materials may be present between the capacitor coil and the filling agent.

Preferably, the entire space between a lateral side wall of the capacitor coil, which may be the lateral surface area of a cylindrical capacitor coil, and the casing is filled by the filling agent. Furthermore, the filling agent may cover the capacitor coil. In particular, the filling agent may cover a base area of the capacitor coil which points to an opening of the casing through which the filling agent is filled in the casing. Preferably, the filling agent entirely covers the capacitor coil and, thereby, may hermetically enclose the capacitor coil.

In one embodiment, an area of the capacitor coil may be not covered by the filling agent. As an example, a part of the surface area, which may be a top surface of the capacitor coil, may be in direct contact with the casing. When assembling the device, the capacitor coil may be placed with its top surface ahead in the casing such that the capacitor coil comes to rest with its top surface on a base of the casing. Then, the filling agent may be filled in the casing such that it encloses the capacitor coil. Preferably, also in this case, the capacitor coil is hermetically enclosed by the filling agent in conjunction with the casing and, in particular, in conjunction with the base of the casing.

By the filling agent, a protection of the capacitor coil from mechanical and chemical damages may be achieved. As an example, the filling agent may comprise a resin material. The resin material may be filled in the casing such that it fills a gap between the casing and the capacitor coil and such that it covers a bottom side of the capacitor coil.

In a preferred embodiment, the capacitor, the starter and the overload protector are positioned relative to each other such that a favorable temperature distribution is achieved.

In particular, the starter element, which may be a source of heat, may be positioned in a distance to the capacitor coil, such that the temperature at the capacitor coil does not rise above a rated temperature of the capacitor coil.

As an example, the maximum temperature at the PTC element may be above 100 °C, while the rated temperature of the capacitor may be less than 85 °C.

Moreover, the starter element is positioned in a distance to the overload protector such that the temperature at the overload protector does not rise above a rated temperature of the overload protector.

In a preferred embodiment, the starter element is thermally insulated by a thermal insulation material. In particular, the thermal insulation material may serve to insulate the PTC element from other components of the device or from the casing. To thermally insulate the PTC element from the casing, an insulation material may be provided at the base of the casing in the area where the PTC element is positioned. The insulation material may comprise a mica material.

Preferably, thereby, the maximum temperature of the part of the casing nearest to the capacitor coil is kept below the rated temperature of the capacitor coil.

By thermally insulating the PTC element, also the power consumed by the PTC element may be reduced. The PTC element may be insulated by air or high temperature grade material, such as mica or an equivalent. Furthermore, the response time for the PTC element to switch on the compressor motor can be reduced, for example, it may be ensured that the response time is less than six seconds.

In a preferred embodiment, the overload protector is positioned in the casing such that its temperature sensing part is optimally close to the compressor when the device is attached to the compressor. Thereby, a high coefficient of performance for the overload protector can be achieved such that the overload protector detects thermal overload with a minimum of reaction time.

Preferably, the electrical connection between the capacitor, the starter and the overload protector is provided inside the casing. As an example, the capacitor may be electrically connected to the starter by connecting wires.

In a preferred embodiment, the casing comprises a closure configured for closing the casing.

The device may be configured such that the closure is positioned on that side of the device which is attached to the compressor motor. In particular, the closure may be attached to a bottom side of the casing. In this case, the closure may comprise openings for receiving connection terminals of the compressor.

The closure may have the shape of a lid. It may be formed from the same material as the casing.

The casing may be formed as a unitary piece. When the casing comprises a closure, the casing may be formed as a unity piece except from the closure. Preferably, the closure is also formed as a unitary piece.

Preferably, the casing comprises an opening through which the capacitor, starter and overload protector can be positioned in the casing. The closure may be configured to at least partially cover the opening and thus, protect the elements inside the casing. In particular, the closure may cover the parts of the casing where the capacitor coil and the starter are positioned.

The closure may be configured such that the overload protector remains uncovered by the closure when the closure is attached to the casing. In particular, it may be shaped such that at least the sensing part of the overload protector is not covered. In this case, the sensing part may be placed directly adjacent to the compressor without a casing in-between. Thereby, the thermal coupling of the compressor and the overload protector can be improved as no barrier is present between the compressor and the overload protector.

Preferably, the closure is configured to be closed and reopened such that a replacement of elements of the device is enabled.

In particular, the closure may be configured such that a replacement of the starter is enabled. The closure may be attached to the casing by a lead screw.

In a preferred embodiment, the starting and running device may be configured such that a replacement of the overload protector is enabled without opening a closure. Thereby, a simple replacement of the overload protector is enabled. Furthermore, a replacement of the overload protector is also enabled in the case that the closure is not re-openable.

According to a further aspect, a method for assembling a starting and running device for a compressor is provided. The method comprises the steps of
A) providing a capacitor, a starter and a casing,
B) placing the capacitor in the casing and fixing the capacitor to the casing by a filling agent,
C) placing the starter in the casing.

Preferably, steps A), B) and C) are carried out consecutively in the given order. Preferably, also an overload protector is placed in the casing, for example after step C). The capacitor, starter, overload protector and casing may comprise any of the features as described above. By the given method, the starting and running device as described above can be assembled.

Preferably, the capacitor comprises a capacitor coil, which is directly fixed to the casing by the filling agent. The filling agent may be a resin material. The casing may comprise a compartment which is separated by walls from the parts of the casing where the starter and the overload protector are positioned. The resin material may be filled into the compartment such that it encloses the capacitor coil.

Prior to step C), the capacitor may be electrically connected and, thereby, in particular, electrically connected to the starter. The starter may comprise terminals which may be connected to electrical connection elements, for example electric wires of the capacitor. For example, the wires may be welded to the terminals of the starter. After connecting the capacitor to the starter, the terminals may be positioned in the casing.

Preferably, the capacitor which is placed in the casing in step B) is free from a capacitor casing.

The method may further comprise the step of
D) providing a closure and closing the casing with the closure.

Preferably, the starter and the capacitor are placed in the casing before the casing is closed by the closure. The overload protector may be positioned in the casing after the closing of the casing. The overload protector may be positioned in a compartment of the casing which is not covered by the closure. Thereby, a replacement of the overload protector may be enabled without that the closure has to be reopened.

Other features will become apparent from the following detailed description when considered in conjunction with the accompanying drawings.
Figure 1 shows a first embodiment of a starting and running device in a perspective bottom view.
Figure 2 shows the first embodiment of the starting and running device in a perspective side view.
Figure 3 shows the first embodiment of the starting and running device with a closure in a perspective bottom view.
Figure 4 shows the first embodiment of the starting and running device during attachment to a compressor in a perspective side view.
Figure 5 shows the starting and running device of figure 4 in a schematic construction view from the top.
Figure 6 shows the first embodiment of the starting and running device attached to a compressor in a top view.
Figure 7 shows a second embodiment of the starting and running device in a perspective bottom view.
Figure 8A shows a schematic view of the electrical connection of the elements of the starting and running device for a resistance start - capacitor run motor.
Figure 8B shows a circuit diagram for the electrical connection of Figure 12A.
Figure 9 shows an overload protector suitable for a starting and running device.

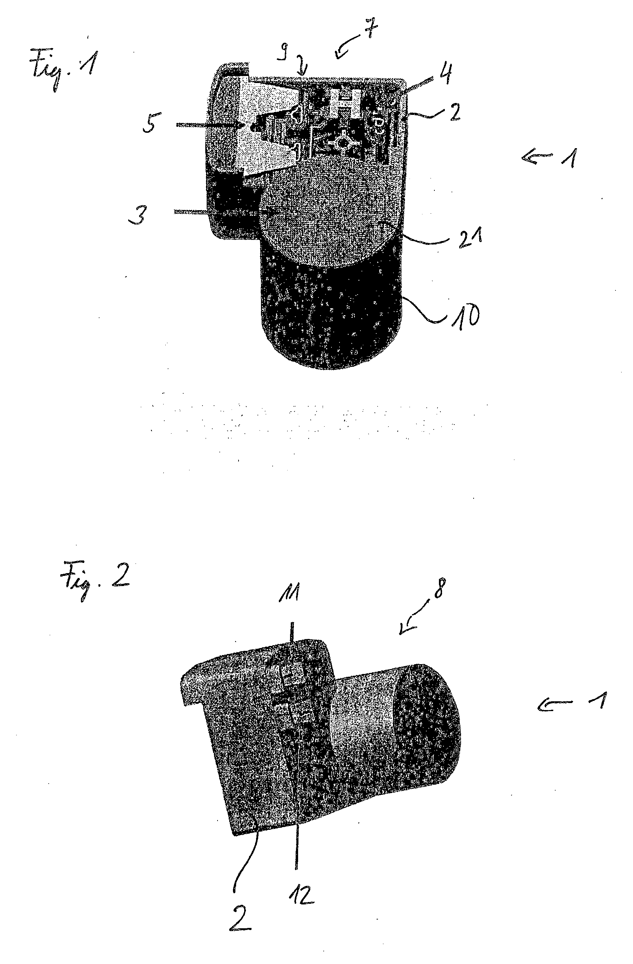

Figure 1 shows a first embodiment of a starting and running device 1 for use with a compressor motor. The starting and running device 1 comprises a casing 2 which houses a capacitor 3, a starter 4 and an overload protector 5. The starting and running device 1 is designed as a single component which can be easily attached to a compressor motor by plugging-in the device 1.

The casing 2 is formed as a unitary piece except from an additional closure (not shown here), by which the casing 2 can be at least partially closed. The casing 2 is made from a plastic material and may be formed in an injection molding process. At its bottom side 7, the casing 2 has an opening 9 which allows a placement of the capacitor 3, the starter 4 and the overload protector 5 in the casing 2. The casing 2 fully encloses the PTC starter 4, the capacitor 3 and the overload protector 5 except from the opening 9 on the bottom side 7 of the casing 2. Preferably, the casing conforms to IP 55 or IP 56 protection according to the International Standard IEC 60259. In particular, the casing is protected against tools and wires over 1 mm diameter and against dust.

The casing comprises a cylindrical compartment 10, wherein the capacitor 3 is positioned. The capacitor 3 may be designed as a motor run capacitor. The capacitor 3 comprises a capacitor coil which may be wound from two layers of a metalized, segmented or non-segmented film comprising polypropylene. The capacitor 3 is directly fixed to the casing 2 by a filling agent 21. In particular, the capacitor 3 is free from an additional capacitor casing. Preferably, the capacitor 3 is either of class P0 or P2 according to the International Standard IEC 60252-1 2001.

The filling agent 21 completely covers the bottom side of the capacitor coil, wherein the bottom side is the side of the capacitor coil pointing to the opening 9, and fills the space between the capacitor coil and the cylindrical compartment 10 of the casing 2. The filling agent 21 serves to fix the capacitor coil 3 to the casing 2 and provides a protection against mechanical and chemical damages. Furthermore, the resin material provides an electrical insulation of the capacitor coil. Preferably, the filling agent 21 is made from a resin material. Preferably, the material of the casing 2 and the material of the filling agent 21 is in compliance with the International Standard IEC 60335-1 Edition 5.0 2010-05. Preferably, the device 1 comprises to RoHs requirements as per EU Directive 2002/95/EC.

The starter 4 comprises a PTC element. The PTC element may have the shape of a disc and may comprise a ceramic material as BaTiO₃, for example. As an example, the PTC pill may have a diameter of between 16 and 20 mm.

The overload protector 5 comprises a bimetal, by which the current flow to the compressor motor is cut off in the case that the temperature rises above a maximum temperature. In the shown embodiment, the overload protector 5 has a flat shape.

The electrical connections between the capacitor 3, the PTC starter 4 and the overload protector 5 are provided inside the casing 2. In particular, the capacitor 3 may comprise connection wires for electrical connection with terminals of the PTC starter 4. Preferably, the length of the connection wires is kept as small as possible in order to minimize the resistance of the wires and a subsequent loss of energy.

The elements in the device 1 are positioned such that a favourable temperature distribution is achieved in the device 1. In particular, the PTC starter 4, which generates heat, is positioned in a suitable distance from both the capacitor 3 and the overload protector 5 to avoid a heating of the capacitor 3 and the overload protector 5 over their rated temperatures. Additionally, the PTC starter 4 is placed on a thermal insulation material to thermally insulate the PTC starter 4 from the casing 2 and, thereby, avoid excessive heating of the casing 2.

Figure 2 shows the starting and running device 1 of Figure 1 in a perspective side view. A first electrical connection element 11 for electrically connecting the overload protector 5 to a power supply and a second electrical connection element 12 for electrically connecting the starter 4 to a power supply are led through the casing 2 at the top side 8 of the casing 2.

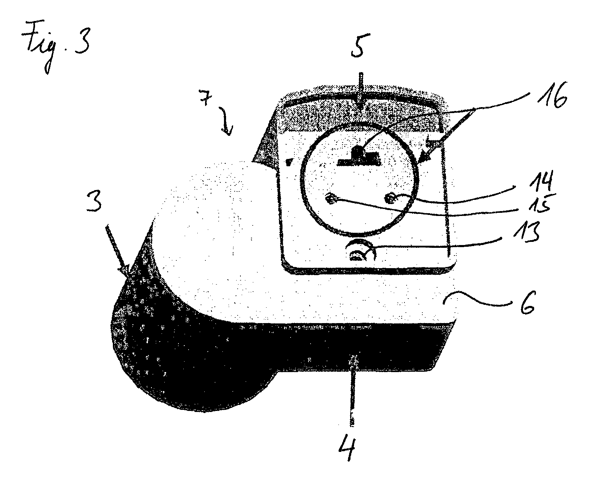

Figure 3 shows the starting and running device 1 of Figure 1 with a closure 5 attached to the bottom side 7 of the casing 2. Preferably, the closure 5 is made from a plastic material and formed in an injection molding process.

The closure 5 is fixed by a lead-screw to the casing 2. The lead screw is positioned in a small opening 13 in the closure 5. By removing the lead-screw, the closure 5 can be reopened. This enables replacement of malfunctioning parts of the device 1, for example, a replacement of the PTC starter 3. The device 1 comprises electrical connections 14, 15, 16 for electrically connecting the starting and running device 1 to the compressor. The electrical connections 14, 15, 16 are accessible through openings in the closure 5 and are configured to receive electrical terminals of the compressor. By plugging the starting and running device 1 on the compressor such that the terminals of the compressor are received in the electrical connections 14, 15, 16 both an electrical and a mechanical connection of the starting and running device 1 with the compressor is established. Additionally, further fixation means may be provided for fixing the device 1 to the compressor. As an example, the compressor may comprise flanges or a metal wire clamp. Alternatively or additionally, the device may be fixed to the compressor by a solid wire clamp, a metal strap or a screw fixation.

The closure 5 covers the compartment 10 of the casing 2 wherein the capacitor 3 is seated and the part of the casing 2 wherein the PTC starter 4 is seated. The closure 2 does not cover the overload protector 5. Thereby, the thermal coupling of the overload protector 5 and the compressor is improved. Furthermore, this enables the overload protector 5 to be replaced without re-opening the closure 2.

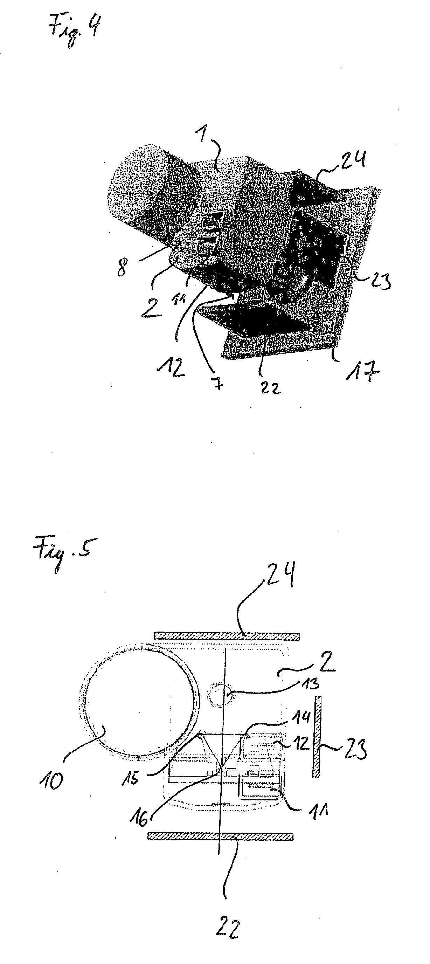

Figure 4 shows the starting and running device 1 during its assembly on a holder 17, which can be attached to the compressor motor. The starting and running device 1 is plugged onto the holder 17 such that terminals 18 are received in electrical connections 14, 15, 16 at the bottom side 7 of the casing 2. The starter device 1 can be electrically connected to a power supply via its connection elements 11, 12 at the top side 8 of the starting and running device 1. The holder 17 comprises fixation means 22, 23, 24 for fixing the device 1 on the compressor motor. Preferably, a clamp fixation of the device 1 is achieved. Moreover, the fixation means 22, 23, 24 ensure a correct configuration of the device 1 on the compressor motor and may also ensure IP protection.

Figure 5 shows a schematic top view of the starting and running device 1 assembled on the holder 17.

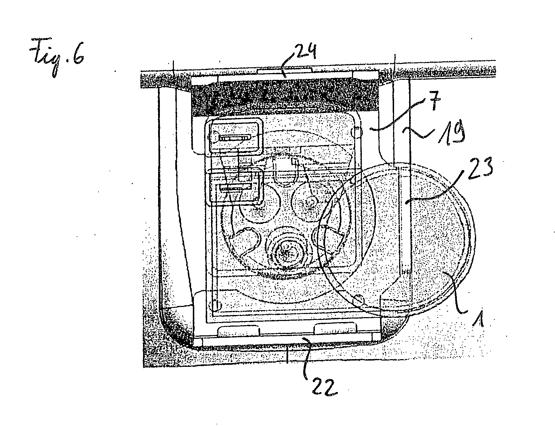

Figure 6 shows a top view of the starting and running device 1 of figure 1 attached to a compressor 19. The starting and running device 1 is seated on a holder 7, which is fixed to the compressor 19, for example fixed by welding, seaming or clinching.

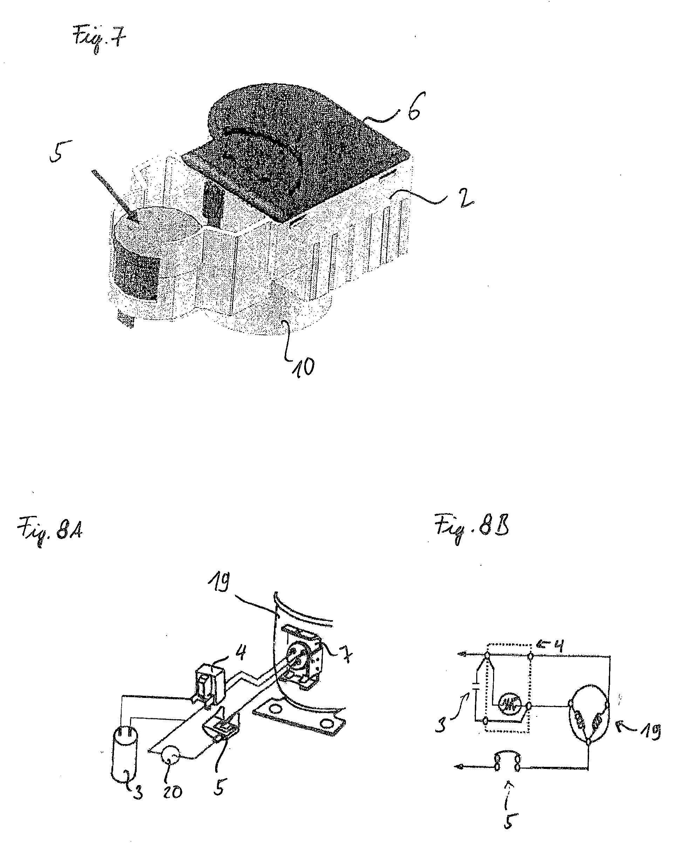

Figure 7 shows a second embodiment of a starting and running device 1. Here, the overload protector 5 is of a round type and, in particular, a circular cylindrical shape. The casing may be designed such that it may accommodate a round type or a flat type overload protector.

In this embodiment, the closure is snap-fitted to the casing. The casing is designed not to be reopened.

The starting and running devices shown in Figures 1 to 7 may be assembled as follows. First, the capacitor 3 is placed in its compartment 10 in the casing 2. Thereafter, a filling material 21 is filled in the casing 2 to cover the capacitor coil 3 and is cured. After that, the connection wires of the capacitor 3 are connected to terminals of the PTC starter 4, for example, by welding. After that, the terminals of the PTC starter 4 and the PTC element is placed in the casing. Then, the overload protector 5 is placed in the casing 2 and a closure 6 is attached to the casing 2, for example, by a lead screw.

Figure 8A shows a schematic view of the electrical connection of the elements of a starting and running device for a resistance start - capacitor run motor. Figure 8B shows a corresponding circuit diagram.

The overload protector 5 is arranged in an electrical connection between a power supply 20 and the compressor 19. When the temperature rises beneath a maximum temperature, the overload protector 5 disconnects the compressor 19 from the power supply 20.

The PTC starter 4 is arranged in an electrical connection between the power supply 20 and the compressor 19 and enables a starting of the compressor 19.

The capacitor 3 is connected to the PTC starter 4 and the power supply 20 and thereby to an auxiliary winding of the compressor 19. Thereby, the performance of the compressor 19 can be improved.

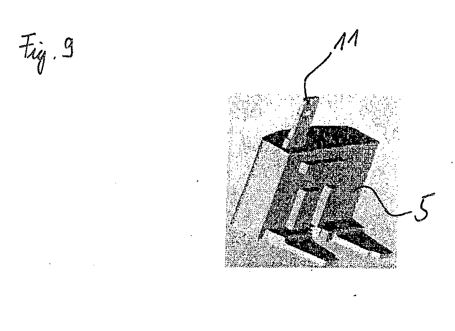

Figure 9 shows an overload protector 5 for integration in a starting and running device. The overload protector 5 has a flat shape. At its top side, a connection 11 for electrically connecting the overload protector 5 to a power supply is provided. The connection 11 can pass through the casing 2 as can be seen in Figure 2.

### Reference numerals

1 starting and running device
2 casing
3 capacitor
4 starter
5 overload protector
6 closure
7 bottom side
8 top side
9 opening
10 cylindrical compartment of casing
11 connection for overload protector
12 connection for starter
13 opening for lead screw
14, 15, 16 electrical connections for compressor
17 housing of compressor
18 terminal
19 compressor
20 power supply
21 filling agent
22, 23, 24 fixation element
25 connection wire
26 capacitor coil

## Claims

1. Starting and running device for a compressor, the device comprising:
a casing (2) enclosing a capacitor (3), a starter (4) and an overload protector (5),
wherein the capacitor (3) is fixed to the casing (2) by a filling agent (21),
wherein the casing (2) is formed as a unitary piece or the casing (2) comprising a closure (6) is formed as a unitary piece except from the closure (6), and
wherein the starter (4) is thermally insulated by a thermal insulation material.

2. Starting and running device according to claim 1,
wherein the capacitor (3) comprises a capacitor coil, which is directly fixed to the casing (2) by the filling agent (21).

3. Starting and running device according to any of claims 1 or 2,
wherein electrical connection between the capacitor (3), the starter (4) and the overload protector (5) is provided inside the casing (2).

4. Starting and running device according to any of claims 1 to 3,
wherein the casing (2) comprises a closure (6) configured for closing the casing (2).

5. Starting and running device according to claim 4,
wherein the closure (6) is configured to be closed and reopened such that a replacement of the starter (4) is enabled.

6. Starting and running device according to any of claims 1 to 5, wherein a placement or replacement of the overload protector (5) is enabled without opening a closure (6) of the casing (2).

7. Starting and running device according to any of claims 4 to 6,
wherein the closure (6) is configured such that the overload protector (5) remains uncovered by the closure (6) when the closure (6) is attached to the casing (2).

8. Method of assembling a starting and running device for a compressor, comprising the steps of
A) providing a capacitor (3), a starter (4) and a casing (2),
B) placing the capacitor (3) in the casing (2) and fixing the capacitor (3) to the casing (2) by a filling agent (21),
C) placing the starter (4) in the casing (2) and thermally insulating the starter (4) via a thermal insulation material.

9. Method of claim 8,
wherein prior to step C) the capacitor (3) is electrically connected to the starter (4).

10. Method of any of claims 8 or 9,
wherein in step B) the capacitor (3) placed in the casing (2) is free from a capacitor casing (2).

11. Method of any of claims 8 to 10,
wherein in step B) the filling agent (21) is filled in the casing (2) such that a covering of the capacitor (3) is achieved.

12. Method of any of claims 8 to 11, wherein the casing (2) comprises a closure (6) and wherein the method further comprises the steps of
D) closing the casing (2) with the closure (6).

13. Method of claim 12, wherein the overload protector (5) is placed in the casing (2) after step D).

## Patentansprüche

1. Starter- und Betriebsvorrichtung für einen Kompressor, wobei die Vorrichtung Folgendes umfasst:
ein Gehäuse (2), das einen Kondensator (3), einen Starter (4) und einen Überlastschutz (5) umgibt,
wobei der Kondensator (3) über einen Füllstoff (21) an dem Gehäuse (2) befestigt ist,
wobei das Gehäuse (2) als einziges Stück ausgebildet ist oder das Gehäuse (2), das einen Verschluss (6) umfasst, als ein einziges Stück ausgebildet ist, mit Ausnahme des Verschlusses (6), und
wobei der Starter (4) durch ein Wärmeisoliermaterial wärmeisoliert ist.

2. Starter- und Betriebsvorrichtung nach Anspruch 1, wobei der Kondensator (3) eine Kondensatorspule umfasst, die über den Füllstoff (21) direkt an dem Gehäuse (2) befestigt ist.

3. Starter- und Betriebsvorrichtung nach einem der Ansprüche 1 oder 2,
wobei die elektrische Verbindung zwischen dem Kondensator (3), dem Starter (4) und dem Überlastschutz (5) in dem Gehäuse (2) bereitgestellt wird.

4. Starter- und Betriebsvorrichtung nach einem der Ansprüche 1 bis 3,
wobei das Gehäuse (2) einen Verschluss (6) aufweist, der zum Verschließen des Gehäuses (2) konfiguriert ist.

5. Starter- und Betriebsvorrichtung nach Anspruch 4, wobei der Verschluss (6) zum Verschließen und erneuten Öffnen konfiguriert ist, sodass ein Auswechseln des Starters (4) ermöglicht wird.

6. Starter- und Betriebsvorrichtung nach einem der Ansprüche 1 bis 5, wobei ein Einsatz oder ein Auswechseln des Überlastschutzes (5) ohne Öffnen eines Verschlusses (6) des Gehäuses (2) ermöglicht wird.

7. Starter- und Betriebsvorrichtung nach einem der Ansprüche 4 bis 6,
wobei der Verschluss (6) derart konfiguriert ist, dass der Überlastschutz (5) nicht von dem Verschluss (6) abgedeckt wird, wenn der Verschluss (6) an dem Gehäuse (2) befestigt wird.

8. Verfahren zum Aufbau einer Starter- und Betriebsvorrichtung für einen Kompressor, wobei das Verfahren die folgenden Schritte umfasst:
A) Bereitstellen eines Kondensators (3), eines Starters (4) und eines Gehäuses (2),
B) Anordnen des Kondensators (3) in dem Gehäuse (2) und Befestigen des Kondensators (3) über einen Füllstoff (21) an dem Gehäuse (2),
C) Anordnen des Starters (4) in dem Gehäuse (2) und Wärmeisolieren des Starters (4) über ein Wärmeisolierungsmaterial.

9. Verfahren nach Anspruch 8, wobei vor Schritt C) der Kondensator (3) elektrisch mit dem Starter (4) verbunden wird.

10. Verfahren nach einem der Ansprüche 8 oder 9, wobei in Schritt B) der Kondensator (3), der in dem Gehäuse (2) angeordnet ist, kein Kondensatorgehäuse (2) aufweist.

11. Verfahren nach einem der Ansprüche 8 bis 10, wobei in Schritt B) der Füllstoff (21) in das Gehäuse (2) gefüllt wird, sodass ein Bedecken des Kondensators (3) erreicht wird.

12. Verfahren nach einem der Ansprüche 8 bis 11, wobei das Gehäuse (2) einen Verschluss (6) umfasst und wobei das Verfahren ferner die folgenden Schritte umfasst:
D) Verschließen des Gehäuses (2) mit dem Verschluss (6).

13. Verfahren nach Anspruch 12, wobei der Überlastschutz (5) nach Schritt D) in dem Gehäuse (2) angeordnet wird.

## Revendications

1. Dispositif de démarrage et de fonctionnement pour un compresseur, le dispositif comprenant :
un boîtier (2) renfermant un condensateur (3), un démarreur (4) et un limiteur de surcharge (5),
dans lequel le condensateur (3) est fixé au boîtier (2) au moyen d'un agent de remplissage (21),
dans lequel le boîtier (2) est formé en tant que pièce d'un seul tenant ou le boîtier (2) comprenant une fermeture (6) est formée en tant que pièce d'un seul tenant mise à part la fermeture (6), et
dans lequel le démarreur (4) est isolé thermiquement au moyen d'un matériau d'isolation thermique.

2. Dispositif de démarrage et de fonctionnement selon la revendication 1,
dans lequel le condensateur (3) comprend une bobine de condensateur, laquelle est fixée directement au boîtier (2) au moyen de l'agent de remplissage (21).

3. Dispositif de démarrage et de fonctionnement selon l'une quelconque des revendications 1 et 2,
dans lequel la connexion électrique entre le condensateur (3), le démarreur (4) et le limiteur de surcharge (5) est prévue à l'intérieur du boîtier (2).

4. Dispositif de démarrage et de fonctionnement selon l'une quelconque des revendications 1 à 3,
dans lequel le boîtier (2) comprend une fermeture (6) configurée pour fermer le boîtier (2).

5. Dispositif de démarrage et de fonctionnement selon la revendication 4,
dans lequel la fermeture (6) est configurée pour être fermée et rouverte de telle sorte qu'un remplacement du démarreur (4) soit permis.

6. Dispositif de démarrage et de fonctionnement selon l'une quelconque des revendications 1 à 5,
dans lequel un placement ou un remplacement du limiteur de surcharge (5) est permis sans ouvrir une fermeture (6) du boîtier (2).

7. Dispositif de démarrage et de fonctionnement selon l'une quelconque des revendications 4 à 6,
dans lequel la fermeture (6) est configurée de telle sorte que le limiteur de surcharge (5) reste non recouvert par la fermeture (6) lorsque la fermeture (6) est fixée au boîtier (2).

8. Procédé d'assemblage d'un dispositif de démarrage et de fonctionnement pour un compresseur, comprenant les étapes de
A) fourniture d'un condensateur (3), d'un démarreur (4) et d'un boîtier (2),
B) placement du condensateur (3) dans le boîtier (2) et fixation du condensateur (3) au boîtier (2) au moyen d'un agent de remplissage (21),
C) placement du démarreur (4) dans le boîtier (2) et isolation thermique du démarreur (4) par le biais d'un matériau d'isolation thermique.

9. Procédé selon la revendication 8,
dans lequel, préalablement à l'étape C), le condensateur (3) est connecté électriquement au démarreur (4).

10. Procédé selon l'une quelconque des revendications 8 et 9,
dans lequel, à l'étape B), le condensateur (3) placé dans le boîtier (2) est dépourvu d'un boîtier du condensateur (2).

11. Procédé selon l'une quelconque des revendications 8 à 10,
dans lequel, à l'étape B), l'agent de remplissage (21) est chargé dans le boîtier (2) de telle sorte qu'un recouvrement du condensateur (3) soit obtenu.

12. Procédé selon l'une quelconque des revendications 8 à 11,
dans lequel le boîtier (2) comprend une fermeture (6) et dans lequel le procédé comprend en outre l'étape de
D) fermeture du boîtier (2) avec la fermeture (6).

13. Procédé selon la revendication 12,
dans lequel le limiteur de surcharge (5) est placé dans le boîtier (2) après l'étape D).
